Europäisches Patentamt

European Patent Office

Office européen des brevets

(11) Veröffentlichungsnummer: **0 071 837**
A1

# (12) EUROPÄISCHE PATENTANMELDUNG

(21) Anmeldenummer: 82106662.8

(51) Int. Cl.³: **C 01 B 17/90**

(22) Anmeldetag: 23.07.82

(30) Priorität: 04.08.81 DE 3130841

(43) Veröffentlichungstag der Anmeldung: 16.02.83
Patentblatt 83/7

(84) Benannte Vertragsstaaten: **BE DE FR GB IT**

(71) Anmelder: **BAYER AG, Zentralbereich Patente, Marken und Lizenzen, D-5090 Leverkusen 1, Bayerwerk (DE)**

(72) Erfinder: **Dobbers, Jürgen, Dr., Carl-Rumpff-Strasse 51, D-5090 Leverkusen 1 (DE)**
Erfinder: **Knieper, Peter, Semmelweisstrasse 121, D-5000 Köln 80 (DE)**
Erfinder: **Schultz, Karl-Heinz, Dr., Deswatinesstrasse 61, D-4150 Krefeld 1 (DE)**

(54) **Verfahren zur Spaltung von verdünnter Schwefelsäure.**

(57) Die vorliegende Erfindung betrifft ein Verfahren zur Spaltung von gegebenenfalls metallsulfathaltiger, mit organischen Bestandteilen verunreinigter verdünnter Schwefelsäure durch Pyrolyse bei Temperaturen über 1000 °C. Die Säure wird bei niedrigen Temperaturen zunächst zerstäubt und anschließend in schon fein verteilter Form der Pyrolyse sowie Oxydation der organischen Verunreinigungen unterworfen.

Hierin wird in einer Zweistoffdüse (1) die aufzuarbeitende Schwefelsäure (2) mit Pressluft (3) außerhalb der Brennkammer zerstäubt. Das entstandene Luft/Flüssigkeitgemisch wird in die Pyrolysekammer (6) eingeleitet.

EP 0 071 837 A1

0071837

BAYER AKTIENGESELLSCHAFT     5090 Leverkusen, Bayerwerk
Zentralbereich
Patente, Marken und Lizenzen   Je/kl-c

## Verfahren zur Spaltung von verdünnter Schwefelsäure

Die vorliegende Erfindung betrifft ein Verfahren zur Spaltung von gegebenenfalls metallsulfathaltiger, mit organischen Bestandteilen verunreinigter verdünnter Schwefelsäure durch Pyrolyse bei Temperaturen über 1000°C. Die Säure wird bei niedrigen Temperaturen zunächst zerstäubt und anschließend in schon fein verteilter Form der Pyrolyse sowie Oxydation der organischen Verunreinigungen unterworfen.

Bei der Herstellung von Titandioxid nach dem Sulfatverfahren fällt Eisensulfatheptahydrat in großen Mengen an. Dieses sogenannte Grünsalz, welches noch anhaftende Schwefelsäure enthält, wird üblicherweise durch Spaltung in Eisenoxid und Schwefeldioxid aufgearbeitet. Bei der Spaltung von Eisensulfat bzw. der anhaftenden Schwefelsäure wird viel Energie benötigt. Es ist Stand der Technik (vgl. z.B. H. Werth, Nachrichten aus Chemie u. Technik, 77, Seite 409, 1959), diese zumindest zum Teil durch Verbrennung von Schwefel oder Kohle zu erzeugen. Ein Anteil der Energie kann in einer Brennkammer in Form von heißen Gasen erzeugt und den zu spaltenden festen Substanzen zugeführt oder zur Vorwärmung der Brennerluft bzw. Dampferzeugung eingesetzt werden.

Le A 20 547

Zur pyrolytischen Spaltung wäßriger, verunreinigter Schwefelsäuren, die gegebenenfalls noch Metallsulfate und/oder Organika enthalten, werden z.B. Mehrstoffbrenner (vgl. z.B. W. Leuckel, R. Römer, VDI-Berichte, Nr.286, 1977) eingesetzt, welche die zu pyrolysierenden Substanzen neben Heizmittel und Zerstäubungsmittel in die Brennkammer einspeisen. (Vgl. z.B. U. Sander, G. Daradimos, Dechema-Monographien, Nr. 1743-1974, 1979, Band 86/I, Seite 234).

Der vorliegende Vorschlag geht nun dahin, den heißen Gasen auf geeignete Art und Weise die verunreinigte verdünnte Schwefelsäure zuzuführen, indem der Ort der Zerstäubung der Flüssigkeit und der Ort der Pyrolyse und Oxydation in der vorgeschlagenen Weise voneinander getrennt sind.

Es wurde nämlich festgestellt, daß in technisch und wirtschaftlich vorteilhafter Weise unter besonderen Bedingungen die Zerstäubung der zu spaltenden Flüssigkeit ausserhalb der Brennkammer vorgenommen und das erzeugte Luft/Flüssigkeit-Gemisch über einen Düsenvorsatz in die Pyrolysezone geleitet werden kann.

Gegenstand der vorliegenden Erfindung ist daher ein Verfahren zur Spaltung von verdünnter, mit organischen Bestandteilen verunreinigter, gegebenenfalls metallsulfathaltiger Schwefelsäure durch Pyrolyse bei Temperaturen über 1000°C, welches dadurch gekennzeichnet ist, daß die Säure bei niedrigen Temperaturen zunächst zerstäubt und anschließend in schon fein verteilter Form der Pyrolyse und Oxydation unterworfen wird.

Le A 20 547

0071837

Die Zerstäubung der verdünnten, mit Organika verunreinigten, gegebenenfalls noch metallsulfathaltigen Schwefelsäure erfolgt bei niedrigen Temperaturen d.h. bei Außen- bzw. Betriebstemperaturen, die üblicherweise ca. 50°C nicht übersteigen. Vorteilhafterweise erspart diese Betriebsweise den Bau aufwendiger Einrichtungen zur Kühlung der Düse oder den Einsatz hochwertigen Düsenmaterials. Zur Zerstäubung wird vorzugsweise unter Druck stehende Luft oder auch andere inerte oder brennbare, oxydativ wirkende Gase eingesetzt.

Erfindungsgemäß erfolgt die Zerstäubung örtlich getrennt von und vor dem Eintrag der bereits zerstäubten Säure in die Pyrolysekammer. Damit jedoch zwischen Zerstäubung der Säure und Eintritt der fein verteilten Säure in die Kammer keine Abscheidung eintritt, kann erfindungsgemäß bevorzugt die Vorrichtung gemäß Zeichnung verwendet werden. Hierin wird in einer handelsüblichen Zweistoffdüse (1) (vgl. hierzu z.B. Ullmann, Encyklopädie der technischen Chemie, 1972, Bd. 2, Verfahrenstechnik, Seite 256), die aufzuarbeitende Schwefelsäure (2) mit Preßluft (3) außerhalb der Brennkammer zerstäubt. Das entstandene Luft/Flüssigkeit-Gemisch wird durch ein anschließendes Rohr, das ganz oder teilweise aus einem nichtmetallischen Werkstoff, z.B. Quarz oder vitrokeramischen bzw. keramischen Material besteht, in die Pyrolysekammer (6) eingeleitet. In einer vorzugsweisen Ausgestaltung werden die Dichtungen zwischen Quarzrohr (5) und Zweistoffdüse (1) durch einen Luftstrom (4) gekühlt, und die Kühlluft wird in die Nähe des Endes des Quarzrohres

Le A 20 547

(5) geführt. So können eventuell noch auftretende Tropfen am Ende des Quarzrohres von der Zusatzluft zerstäubt werden. Die Abscheidung von Flüssigkeit an der Wandung des Quarzrohres und der Auswurf grober Tropfen, die zu lokaler Unterkühlung der Brennkammer führen könnten, können weiterhin durch Verengung der Austrittsöffnung der Quarzrohrleitung oder durch entsprechende Länge des ungeschützten Quarzrohres in der Pyrolysekammer, was eine ausreichende Temperatureinwirkung bzw. Wiederverdampfung bedeutet, vermieden werden.

Das vorliegende Verfahren soll durch die folgenden Beispiele noch näher erläutert werden:

Le A 20 547

**Beispiel 1**

In einer Brennkammer, die einem Etagenofen zur Spaltung von Eisensulfat vorgeschaltet ist, wurden stündlich 350 kg Heizöl bzw. 1450 kg Schwefel mit bis zu 11000 $m_N^3$ auf 80°C vorgewärmter Luft verbrannt. Die Temperatur der Rauchgase am Übergang von der Brennkammer zum Etagenofen betrug 1100°C. Die eingebrachte Dünnsäuremenge betrug maximal 2100 kg stündlich. Das die Brennkammer verlassende Gasgemisch wurde zur Abröstung von Mengen bis zu 3,8 Tonnen getrocknetem Eisensulfat-Monohydrat eingesetzt. Die Zerstäubung der Dünnsäure (30 % $H_2SO_4$) erfolgte innerhalb der Brennkammer in einer marktüblichen Druckverstäubungsdüse aus $V_2A$ (Europäische Werkstoffnummer 14541). Durch Korrosion der Düse in der Brennkammer konnte eine gezielte Zerstäubung der Dünnsäure über mehr als 10 Stunden nicht aufrechterhalten werden.

**Beispiel 2**

Analog Beispiel 1 wurde anstelle der Düse in der Kammer in der beschriebenen Weise eine Zweistoffdüse gleichfalls aus $V_2A$ (wie in Beispiel 1) samt Düsenvorsatz angebracht. Die Standzeit dieser Zersetzungseinrichtung konnte durch die geschilderte erfindungsgemäße Anordnung beträchtlich erhöht werden. Nach 6 Monaten war die Düse noch in Betrieb.

**Le A 20 547**

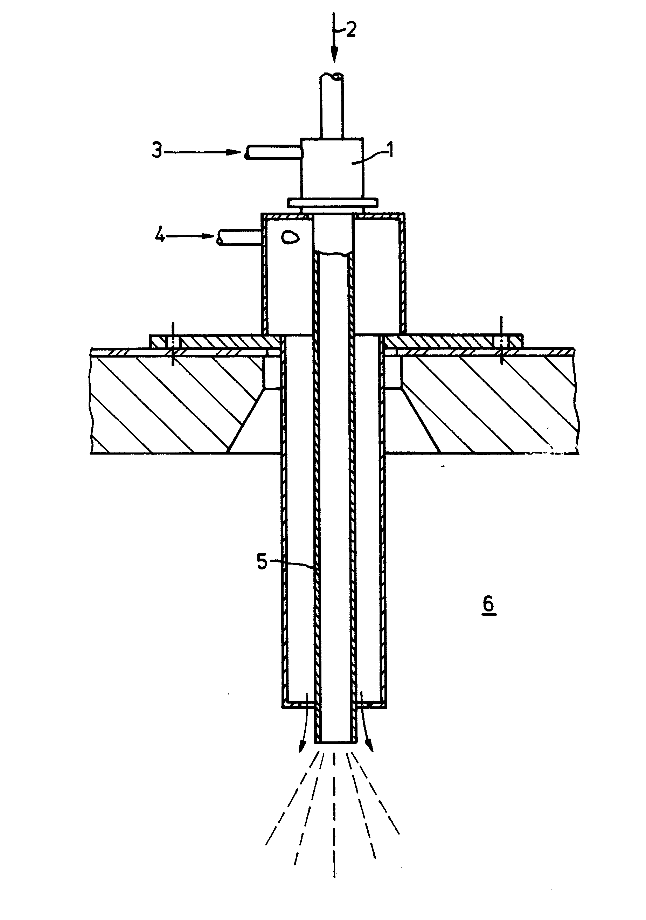

## Patentansprüche

1.  Verfahren zur Spaltung von verdünnter, mit organischen Bestandteilen verunreinigter, gegebenenfalls metallsulfathaltiger Schwefelsäure durch Pyrolyse bei Temperaturen über 1000°C, dadurch gekennzeichnet, daß die Säure bei niedrigen Temperaturen zunächst zerstäubt und anschließend in schon fein verteilter Form der Pyrolyse unterworfen wird.

2.  Verfahren nach Anspruch 1, dadurch gekennzeichnet, daß die Säure bei Temperaturen bis zu ca. 50°C zerstäubt wird.

3.  Verfahren nach Anspruch 1 oder 2, dadurch gekennzeichnet, daß die bereits zerstäubte Säure durch ein Quarzrohr in die Pyrolysekammer eingebracht wird.

4.  Verfahren nach einem oder mehreren der Ansprüche 1 bis 3, dadurch gekennzeichnet, daß die Zerstäubung mit Luft vorgenommen wird.

Le A 20 547

Europäisches
Patentamt

**EUROPÄISCHER RECHERCHENBERICHT**

0071837
Nummer der Anmeldung

EP 82 10 6662

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | C 01 B 17/90 |
| A | FR-A-1 515 350 (PRENCO MANUFACTURING COMPANY) * Seite 4, Anspruch 1 * | 1 | |
| | --- | | |
| A | CHEMICAL ABSTRACTS, Band 75, Nr. 4, 26. Juli 1971, Seite 160, Nr. 23324w, Columbus, Ohio, USA & JP - A - 71 03244 (DOWA MINING CO., LTD.) 27-01-1971 * Zusammenfassung * | | |
| | --- | | |
| A | DE-A-2 415 883 (RKUPP) | | |
| | --- | | |
| A | GB-A-1 119 236 (CHEMICAL CONSTRUCTION CORP.) | | RECHERCHIERTE SACHGEBIETE (Int. Cl. 3) |
| | --- | | |
| A | FR-A- 767 870 (METALLGESELLSCHAFT AG) | | C 01 B 17/90 |
| | --- | | |
| A | DE-C- 686 242 (I.G. FARBENINDUSTRIE) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 03-11-1982 | STEELANDT B. |